# EUROPEAN PATENT SPECIFICATION

(11) **EP 3 805 620 B1**
(45) Date of publication and mention of the grant of the patent: **25.01.2023**
(21) Application number: 20201022.9
(22) Date of filing: 09.10.2020
(51) Int. Cl.: F16K 11/052, F16K 27/02, F16K 1/42

(54) **A VALVE ASSEMBLY WITH SEALINGS FITTED INTO GROOVES IN THE VALVE ASSEMBLY HOUSING**
VENTILANORDNUNG MIT IN NUTEN DES GEHÄUSES EINER VENTILANORDNUNG EINGESETZTEN DICHTUNGEN
ENSEMBLE SOUPAPES COMPORTANT DES JOINTS D'ÉTANCHÉITÉ MONTÉS DANS LES RAINURES DU BOÎTIER DE L'ENSEMBLE SOUPAPES

(30) Priority: 11.10.2019 DK PA201970638
(43) Date of publication of application: 14.04.2021
(73) Proprietor: Agrisys A/S, 7400 Herning (DK)
(72) Inventor: SCHMIDT, Marcio A., 48691 Vreden (DE); KIRK, Mikael, 7400 Herning (DK)
(74) Representative: Zacco Denmark A/S

(56) References cited:
- GB-A- 1 286 769
- US-A- 5 105 853
- US-A1- 2007 084 437

## Description

The present invention relates to an arrangement for transferring animal food or other products advanced in an air flow, such as into a feed trough.

Animal food, when in granular form, in form of particles, or pills, may be transferred into feed troughs using pipes. The pipes guide the flow of animal food to feed troughs which may be arranged in series. In order to guide animal food into a feed trough and afterwards to a next feed trough, valves may be used. The food is usually transferred in flows with such flow rates that they in combination with the coarse and corrosive nature of the food, will wear sealings within the valves. US 5265547 A discloses a valve assembly comprising a housing formed by a first housing part and a second housing part, the housing defining a first opening, a second opening, and a third opening, a first flow path being de-fined between the first opening and the second opening, and a second flow path being defined between the first opening and the third opening,

the valve assembly further comprising a valve element. US 5,105,853 discloses a valve assembly according to the preamble of claim 1.

The object of the present invention is inter alia to provide a solution for reducing the wearing of valve sealings.

### Summary

In view of this object, a valve assembly is provided reducing the wearing of the sealings by fitting the sealings in grooves inside the walls of the housing of the valve. In this way, the impact of the flow of food onto the sealings is minimized.

In an embodiment, the valve assembly comprises a valve housing, formed by two housing parts, and comprises three openings, for connection with 3 pipes.

A first pipe guides a flow of food into the valve assembly, and a plate shaped diverter valve element diverts the flow of food either to a second pipe which guides the flow of food away from a feed trough, or diverts the flow of food to a third pipe which guides the flow of food to the feed trough.

The inner surface of the valve housing comprises grooves, wherein sealings are fitted into. The parts of the sealings reaching out from the grooves are either rounded or have inclined edges. The edges of the plate shaped valve element are also either rounded or inclined. This configuration allows for a flush connection between the edges of the sealings and the edges of the valve element. This in turn, will allow the sealings to be covered during a flow of food and the wearing of the sealing thus reduced.

### Brief description of the drawings

Fig. 1 is a schematic view of an embodiment of the arrangement for transferring animal food into a feed trough.
Fig. 2 is a schematic view of an embodiment of the valve assembly comprised in the arrangement of fig. 1.
Fig. 3 schematically shows an exploded view of the valve assembly of fig. 2.
Fig. 3a is a schematic cross-sectional view of the valve assembly shown in fig. 2.
Fig. 4 is a schematic view of the valve assembly with the second housing part removed.
Fig. 5a is a schematic view of the first housing part connected to the inlet pipe and the outlet pipe.
Fig. 5b is a schematic view of the first housing part of fig. 5a with the sealings fitted into the grooves of the first housing part.
Fig. 5c is a schematic view of the first housing part of fig. 5b with the valve element allowing for flow through the first flow path and closing off the second flow path.
Fig. 6a is a schematic view of the valve element drive mechanism.
Fig. 6b is a schematic view showing the valve element drive mechanism of fig. 6a from a different perspective.
Fig. 6c shows schematically the valve drive mechanism arranged in the valve assembly of fig. 2.
Fig. 7 shows schematically the valve assembly in connection with a cyclone.

### Detailed description

The invention will now be explained in more detail below by reference to the drawings.

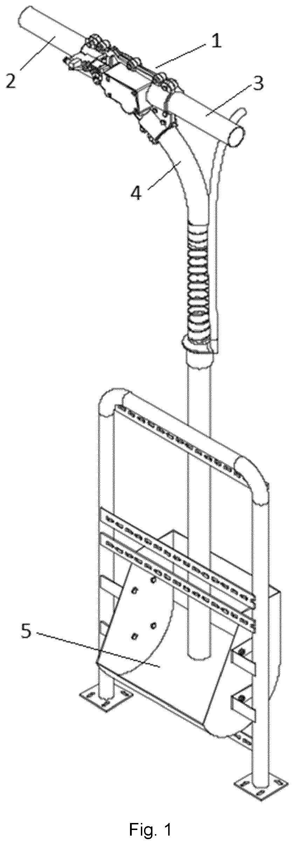

Fig. 1 shows schematically an embodiment of an arrangement for transferring animal food into a feed trough 5. The arrangement comprises a valve assembly 1 for directing an incoming food flow into or past the feed trough, an inlet pipe 2 in connection with the valve assembly 1 and upstream of the valve assembly 1, for guiding the food flow into the valve assembly, an outlet pipe 3 in connection with the valve assembly 1 and downstream of the valve assembly 1, for guiding the incoming food flow away from the valve assembly 1 and towards e.g. a second feed trough 5 (not shown), a feed pipe 4 in connection with the valve assembly 1 and downstream of the valve assembly 1, for guiding the incoming food into the feed trough 5.

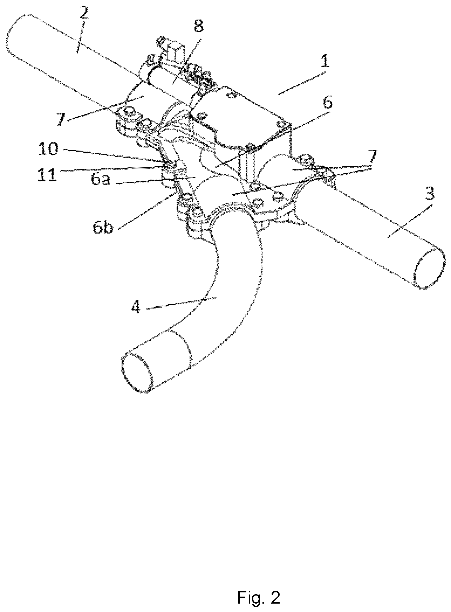

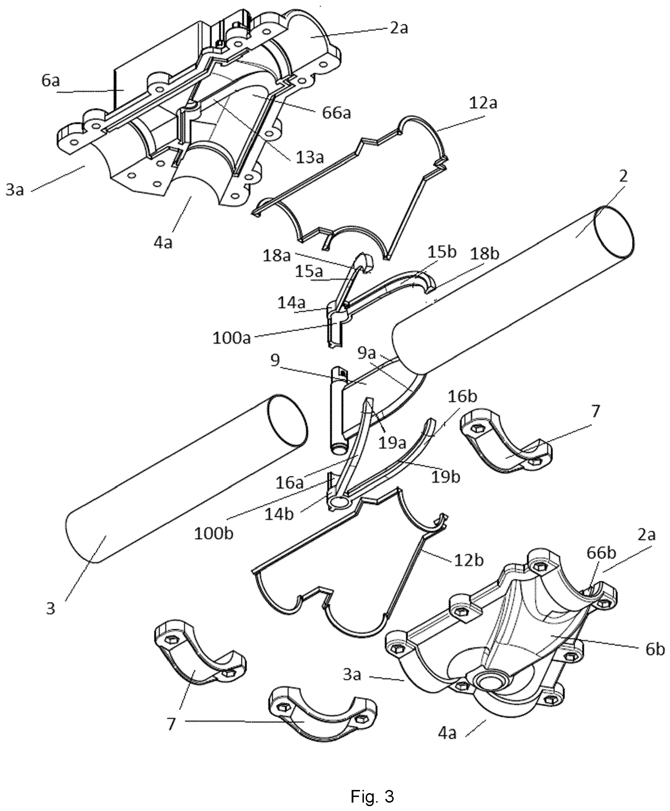

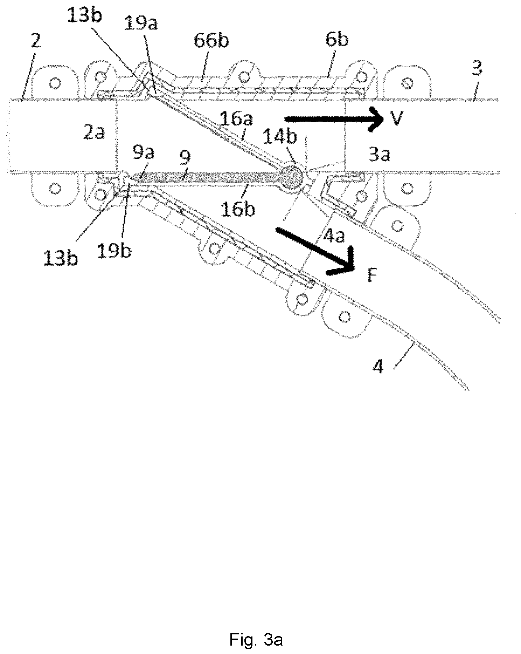

Fig. 2 shows schematically and in more details the valve assembly 1 shown in fig. 1. The valve assembly 1 comprises a housing 6 defined by a first housing part 6a and a second housing part 6b. The inlet pipe 2, the outlet pipe 3, and the feed pipe 4, are connected to the first housing part 6a using clamps 7. The valve assembly 1 further comprises an actuator 8, for driving a plate shaped valve element 9 (shown in fig. 3) for diverting the incoming food flow towards the outlet pipe 3 or towards the feed pipe 4. The first and second housing parts 6a and 6b

may be connected to each other with fasteners 10 such as bolts or screws, through holes 11 in the first and second housing parts 6a and 6b. The clamps 7 may be used for retaining pipes and valves in any type of valves, configured to have a housing part removed during a maintenance service or reparation, and not restricted to the shown embodiment of the present valve assembly 1. This arrangement allows for an easier service and reparation of the valve, since the pipes or the valve does not have to be dismantled, as only a part of the housing is removed.

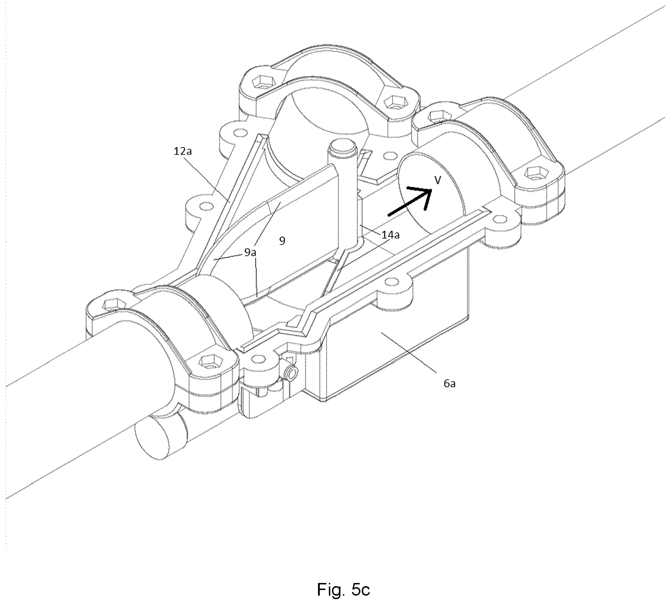

Fig. 3 shows schematically an exploded view of the valve assembly 1 with the inlet pipe 2 and outlet pipe 3. The figure shows the parts forming the valve assembly 1. A first housing seal 12a is associated with the first housing part 6a, and a second housing seal 12b is associated with the second housing part 6b. The housing seals 12a and 12b received in corresponding first and second housing grooves discussed below with reference to fig. 5c are shaped as closed loops, and when the valve assembly is assembled, the housing seals 12a and 12b are opposite each other, with some portions of one contacting corresponding portions of the other one and with other portions contacting a corresponding portion of the periphery of a pipe 2, 3, 4.

A first groove 13a is formed in an inner face 66a of the first housing part 6a.

The second housing part 6b comprises a second groove 13b formed in an inner face 66b of the second housing part 6b. The first groove 13a is opposite the second groove 13b in the valve assembly 1.

A first seal 14a is associated with the first housing part 6a and a second seal 14b is associated with the second housing part 6b. The first seal 14a has a first elongated member 15a and a second elongated member 15b, and the second seal 14b has a first elongated member 16a and a second elongated member 16b. The first elongated members 15a and 15b are associated with the first housing part 6a, and the second elongated members 16a and 16b are associated with the second housing part 6b. A valve element 9 is arranged inside the housing 6, rotatably fixed between the first and second seals 14a and 14b and is movable between a first and second position. The valve element 9 may be plate shaped and a portion of the edge 9a of the valve element 9 is rounded or has inclined edges.

In an embodiment of the valve assembly 1, the first and second elongated members 15a, 15b, 16a, 16b of the first and second seals 14a, 14b and the valve element 9 comprise rounded or angled edges 18a, 18b, 19a, 19b, 9a, and are in flush connection when the valve element 9 abuts the first or second seal 14a, 14b in the first or second position. Thereby it is achieved that the seals 13a, 13b are covered during a flow of food and the wear of the seals is reduced. The seals may be made of polymers, such as elastomers for the first and second seal 14a, 14b, e.g. TPE (thermoplastic elastomers). TPU (thermoplastic polyurethane) may be used for forming the housing seals 12a, 12b, and PA6-GF30 (Glass fiber reinforced Polyamide) may e.g. be used for forming the two housing parts 6a, 6b.

Fig. 3a shows schematically the valve assembly 1, where the first housing part 6a is removed and where the valve element 9 is abutting the second elongated member 16b of the second seal 14b, thereby opening the first flow path V defined between the inlet pipe 2 and the outlet pipe 3, and closing off the second flow path F. In this shown position, the valve element 9 will prevent the food flow from entering the feed pipe 4 and allow the food flow to be guided into the outlet pipe 3. When the second housing part 6b is connected to the first housing part 6a, the valve element 9 will abut against the second elongated members 15b and 16b of the first and second seals 14a and 14b, when closing the second flow path F as shown in fig. 3a. The first and second seals 14a, 14b may in one embodiment not being part of the claimed invention be formed together as one piece.

The edge 9a of the valve element 9 is shown abutting the rounded or angled edge 19b of the second seal 14b, inside the second groove 13b. In a situation where the valve element 9 allows for flow through the first flow path V, the edge 9a of the valve element 9 will be abutting the rounded or angled edge 18b of the second seal 14b, inside the second groove 13b. When the valve assembly 1 is assembled, the edge 9a will abut the rounded or angled endges 18a and 19a when the second flow path F is open, and the rounded or angled endges 18b and 19b when the second flow path F is open.

In an embodiment of the valve assembly 1, the surfaces of the first and second elongated members 15a, 15b, 16a, 16b, facing away from the inner face 66a, 66b of the first and second housing parts 6a, 6b, and reaching out from the first and second grooves 13a, 13b, are rounded or have inclined angles relative to each other.

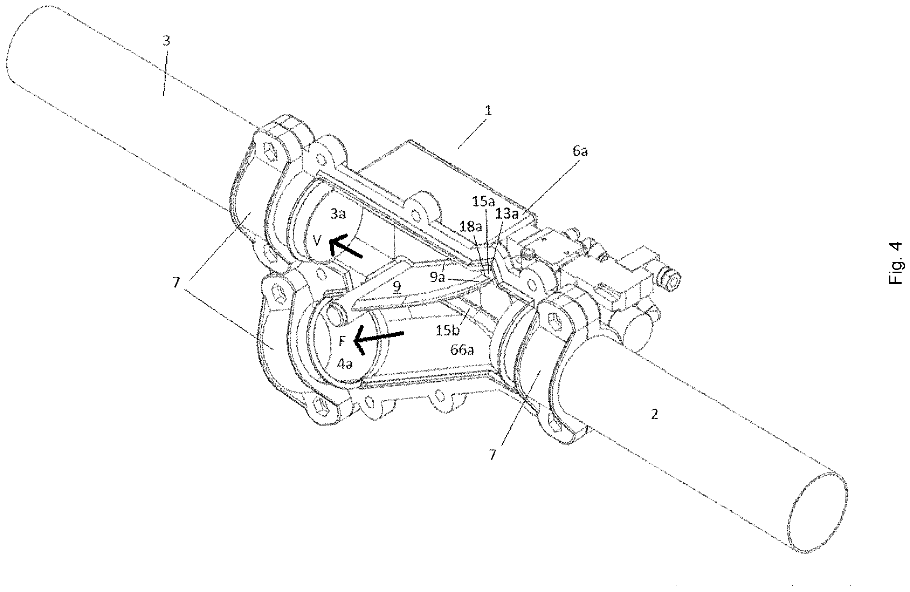

Fig. 4 shows schematically the valve assembly 1 with the second housing part 6b being removed. A first flow path is indicated by an arrow V and is defined between the inlet pipe 2 and the outlet pipe 3, and a second flow path is indicated by an arrow F and is defined between the inlet pipe 2 and the feed pipe 4 (not shown); the pipes 2, 3 are held to the first housing part 6a via releasable clamps 7.

The valve element 9 is shown abutting the first elongated member 15a of the first seal 14a, thereby closing off the first flow path V, and opening a the second flow path F. In the shown position, the valve element 9 will diverge an incoming food flow towards the feed pipe 4.

When the valve assembly 1 is assembled with the second housing part 6b not being removed, the valve element 9 will be abutting the first elongated members 15a and 16a of the first and second seals 14a and 14b, when closing off the first flow path V as shown in fig. 4.

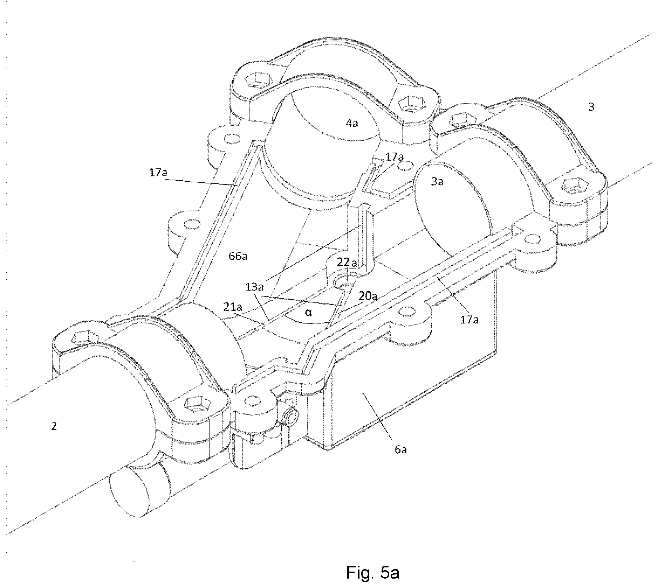

Fig. 5a shows schematically the first housing part 6a. A first closed loop outer groove 17a and a first groove 13a are shown. The first outer groove 17a is configured to accommodate the first housing seal 12a and the first groove 13a is configured to accommodate the first seal 14a. A second closed loop outer groove and second groove 13b is formed in the second housing part 6b opposite the first outer groove 17a and the first groove 13a, respectively.

In an embodiment of the valve assembly 1, the first and second grooves 13a, 13b each comprise a first groove portion 20a, 20b and a second groove portion 21a, 21b meeting at an angle α, and merging at an indentation area 22a, 22b, arranged between a second and third opening 3a, 4a (shown in fig. 3a) of the valve assembly 1, and arranged closer to the second and third opening 3a, 4a than to a first opening 2a (shown in fig. 3a) of the valve assembly 1.

The two elongated members 15a and 15b are connected to each other to form part of a sealing bushing 100a receiving a center axle of the valve element 9.

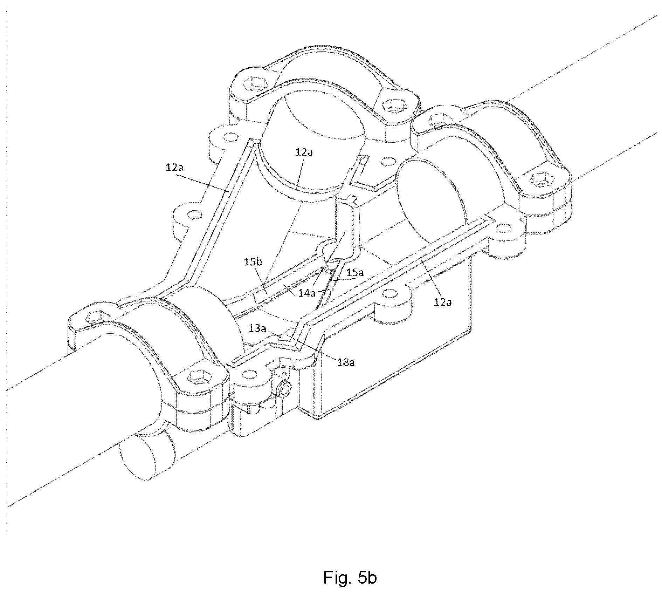

Fig. 5b shows schematically the first housing part 6a of fig. 5a with the first housing seal 12a being fitted into the first outer groove 17a, and the first seal 14a being fitted into the first groove 13a.

Fig. 5c shows schematically the first housing part 6a of fig. 5b with the valve element 9 rotatably arranged within the first housing part 6a, and arranged such as to close off the second flow path F and to allow a flow through the first flow path V.

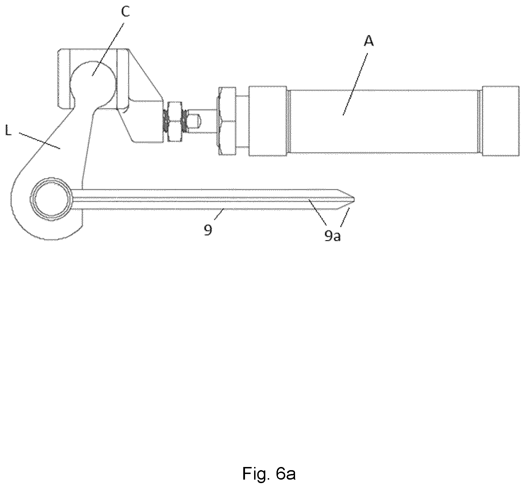

Fig. 6a shows schematically a valve drive mechanism comprising an actuator A, a cam C and a lever L, for controlling the rotating movement of the valve element 9. The actuator may be a pneumatic actuator, which during activation extends an actuator rod, which in turn pushes a cam housing partly enclosing the cam C, thereby rotating a cam lever L, rotatably fixed to the valve element 9

Since the cam lever L is rotatably fixed to the valve element 9, the valve element 9 will start rotating when the cam lever L starts rotating, thereby swiching between opening the flow path F or the flow path V in the valve assembly 1.

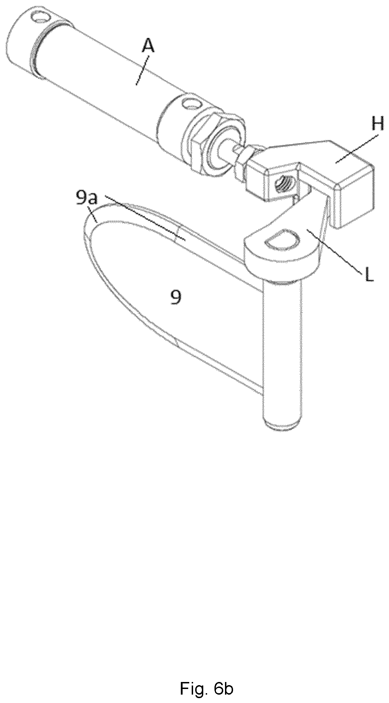

Fig. 6b shows schematically the valve drive mechanism shown in fig. 6a, where the cam C is covered by a the cam housing H.

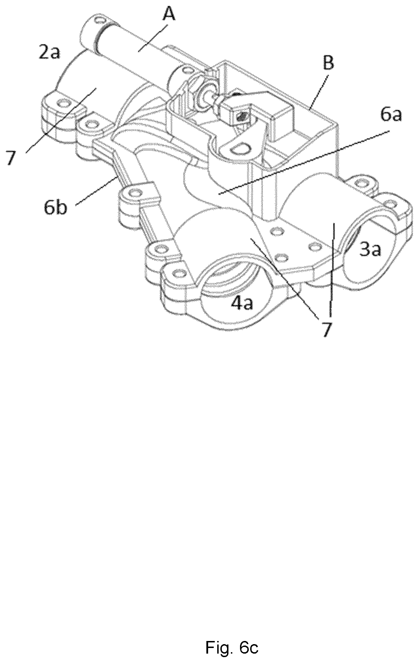

Fig. 6c is a schematic view of the valve assembly of fig.2 with the valve element drive mechanism housing cover being removed, showing the valve element drive mechanism arranged within the valve element drive mechanism housing B.

The valve assembly is not restricted to be used for transporting animal food, and in connection with feed troughs, but may be used for transporting human food and in connection with food dispensers. The valve assembly may be used for transporting any kind of bulk material, and may be in connection with any kind of dispensers, silos, and containers.

The valve assembly may be used in any pneumatic bulk conveyor.

This configuration will not only reduce the wearing of the seal, but also improve the efficiency of maintaining and repairing the valve assembly due to improved accessibility of the interior of the valve assembly.

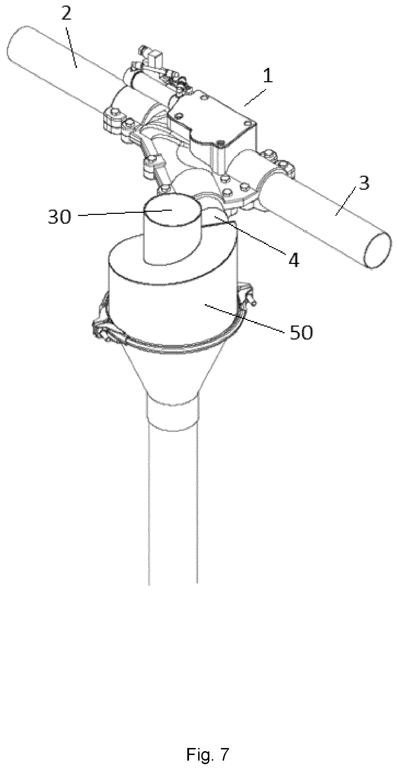

Fig. 7 schematically the valve assembly 1 in connection with a cyclone 50. In another embodiment, the flow path F guides the flow of food into a cyclone 50, separating the air from the flow of food, where the food continues towards the feed trough due to gravity, and the air exits the cyclone from an cyclone outlet 30 arranged at the top of the cyclone 50 due to centrifugal forces, as shown in fig. 7.

## Claims

1. A valve assembly (1), comprising a housing (6), the housing (6) being formed by a first housing part (6a) and an opposite second housing part (6b),
the housing (6) defining a first opening (2a), a second opening (3a), and a third opening (4a),
a first flow path (V) being defined between the first opening (2a) and the second opening (3a), and
a second flow path (F) being defined between the first opening (2a) and the third opening (4a), wherein
the first housing part (6a) comprises an inner face (66a) with a first groove (13a), and the second housing part (6b) comprises an inner face (66b) with a second groove (13b), said second groove (13b) being opposite said first groove (13a),
a first seal (14a) comprising a first elongated member (15a) connected to a second elongated member (15b), and
a second seal (14b) comprising a first elongated member (16a) connected to a second elongated member (16b),
the first and second seal (14a, 14b) being fitted into the first and second grooves (13a, 13b) respectively,
the valve assembly (1) further comprising a valve element (9), configured to abut in a first position the first elongated member (15a) of the first seal (14a) and the first elongated member (16a) of the second seal (14b), thereby closing off the first flow path (V), and allowing flow through said second flow path (F), and configured to abut in a second position the second elongated member (15b) of the first seal (14a) and the second elongated member (16b) of the second seal (14b), thereby closing off said second flow path (F), and allowing flow through said first flow path (V),
**characterized in that** the first seal (14a) and the second seal (14b) are separate components of the valve assembly (1).

2. The valve assembly (1) according to claim 1, wherein the first and second elongated members (15a, 15b, 16a, 16b) of the first and second seals (14a, 14b) and the valve element (9) comprise rounded or angled edges (18a, 18b, 19a, 19b, 9a), and are in flush connection when said valve element (9) abuts the first or second seal (14a, 14b) in said first or second position.

3. The valve assembly (1) according to claim 1, wherein surfaces of the first and second elongated members (15a, 15b, 16a, 16b), facing away from the inner face (66a, 66b) of the first and second housing parts (6a, 6b), and reaching out from the first and second grooves (13a, 13b), are rounded or have inclined angles.

4. The valve assembly (1) according to claim 1, wherein the first and second grooves (13a, 13b) each comprise a first groove portion (20a, 20b) and a second groove portion (21a, 21b) extending at an angle (α) relative to each other, and merging at an indentation area (22a, 22b), arranged between the second and third opening (3a, 4a), and arranged closer to the second and third opening (3a, 4a) than to the first opening (2a).

## Patentansprüche

1. Ventilanordnung (1), umfassend ein Gehäuse (6), welches Gehäuse (6) durch ein erstes Gehäuseteil (6a) und ein entgegengesetztes zweites Gehäuseteil (6b) gebildet ist,
welches Gehäuse (6) eine erste Öffnung (2a), eine zweite Öffnung (3a) und eine dritte Öffnung (4a) definiert,
einen ersten Strömungspfad (V), der zwischen der ersten Öffnung (2a) und der zweiten Öffnung (3a) definiert ist, und
einen zweiten Strömungspfad (F), der zwischen der ersten Öffnung (2a) und der dritten Öffnung (4a) definiert ist, wobei
das erste Gehäuseteil (6a) eine Innenseite (66a) mit einer ersten Nut (13a) umfasst, und das zweite Gehäuseteil (6b) eine Innenseite (66b) mit einer zweiten Nut (13b) umfasst, wobei die zweite Nut (13b) der ersten Nut (13a) entgegengesetzt ist,
eine erste Dichtung (14a), die ein erstes längliches Element (15a) umfasst, das mit einem zweiten länglichen Element (15b) verbunden ist, und
eine zweite Dichtung (14b), die ein erstes längliches Element (16a) umfasst, das mit einem zweiten länglichen Element (16b) verbunden ist,
die erste und zweite Dichtung (14a, 14b) in die erste bzw. zweite Nut (13a, 13b) eingepasst sind,
die Ventilanordnung (1) ferner ein Ventilelement (9) umfasst, das so ausgelegt ist, dass es in einer ersten Position am ersten länglichen Element (15a) der ersten Dichtung (14a) und am ersten länglichen Element (16a) der zweiten Dichtung (14b) anliegt, wodurch der erste Strömungspfad (V) verschlossen wird, und eine Strömung durch den zweiten Strömungspfad (F) ermöglicht wird, und so ausgelegt ist, dass es in einer zweiten Position am zweiten länglichen Element (15b) der ersten Dichtung (14a) und am zweiten länglichen Element (16b) der zweiten Dichtung (14b) anliegt, wodurch der zweite Strömungspfad (F) verschlossen wird, und eine Strömung durch den ersten Strömungspfad (V) ermöglicht wird, **dadurch gekennzeichnet, dass** die erste Dichtung (14a) und die zweite Dichtung (14b) getrennte Komponenten der Ventilanordnung (1) sind.

2. Ventilanordnung (1) nach Anspruch 1, wobei die ersten und zweiten länglichen Elemente (15a, 15b, 16a, 16b) der ersten und zweiten Dichtung (14a, 14b) und das Ventilelement (9) gerundete oder abgewinkelte Kanten (18a, 18b, 19a, 19b, 9a) umfassen und bündig miteinander verbunden sind, wenn das Ventilelement (9) in der ersten oder zweiten Position an der ersten oder zweiten Dichtung (14a, 14b) anliegt.

3. Ventilanordnung (1) nach Anspruch 1, wobei von der Innenseite (66a, 66b) des ersten und zweiten Gehäuseteils (6a, 6b) abgewandte und von der ersten und zweiten Nut (13a, 13b) ausgehende Flächen der ersten und zweiten länglichen Elemente (15a, 15b, 16a, 16b) abgerundet sind oder schräge Winkel aufweisen.

4. Ventilanordnung (1) nach Anspruch 1, wobei die erste und zweite Nut (13a, 13b) jeweils einen ersten Nutabschnitt (20a, 20b) und einen zweiten Nutabschnitt (21a, 21b) umfassen, die sich unter einem Winkel (α) zueinander erstrecken und in einem Einbuchtungsbereich (22a, 22b) zusammenlaufen, der zwischen der zweiten und dritten Öffnung (3a, 4a) angeordnet ist und näher an der zweiten und dritten Öffnung (3a, 4a) als an der ersten Öffnung (2a) angeordnet ist.

## Revendications

1. Ensemble de soupape (1), comprenant un boîtier (6), le boîtier (6) étant formé par une première partie de boîtier (6a) et une deuxième partie de boîtier (6b) opposée,
le boîtier (6) définissant une première ouverture (2a), une deuxième ouverture (3a) et une troisième ouverture (4a),
un premier trajet d'écoulement (V) étant défini entre la première ouverture (2a) et la deuxième ouverture (3a), et
un deuxième trajet d'écoulement (F) étant défini entre la première ouverture (2a) et la troisième ouverture (4a), dans lequel
la première partie de boîtier (6a) comprend une face intérieure (66a) avec une première rainure (13a), et la deuxième partie de boîtier (6b) comprend une face intérieure (66b) avec une deuxième rainure (13b), ladite deuxième rainure (13b) étant opposée de ladite said première rainure (13a),
un premier joint (14a) comprenant un premier élément allongé (15a) relié à un deuxième élément allongé (15b), et
un deuxième joint (14b) comprenant un premier élément allongé (16a) relié à un deuxième élément allongé (16b),
le premier et le deuxième joint (14a, 14b) étant adaptés en forme dans respectivement la première et la deuxième rainure (13a, 13b),
l'ensemble de soupape (1) comprenant en outre un élément de soupape (9) configuré pour buter dans une première position contre le premier élément allongé (15a) du premier joint (14a) et contre le premier élément allongé (16a) du deuxième joint (14b), fermant ainsi le premier trajet d'écoulement ( V), et permettant l'écoulement à travers ledit deuxième trajet d'écoulement (F), et configuré pour buter dans une deuxième position contre le deuxième élément allongé (15b) du premier joint (14a) et contre le deuxième élément allongé (16b) du deuxième joint ( 14b), fermant ainsi ledit deuxième trajet d'écoulement (F) et permettant l'écoulement à travers ledit premier trajet d'écoulement (V) **caractérisé en ce que** le premier joint (14a) et le deuxième joint (14b) sont des composants séparés de l'ensemble de soupape (1).

2. Ensemble de soupape (1) selon la revendication 1, dans lequel les premier et deuxième éléments allongés (15a, 15b, 16a, 16b) des premier et deuxième joints (14a, 14b) et l'élément de soupape (9) comprennent des bords arrondis ou inclinés (18a, 18b, 19a, 19b, 9a), et sont en liaison affleurante lorsque ledit élément de soupape (9) bute contre le premier ou le deuxième joint (14a, 14b) dans ladite première ou deuxième position.

3. Ensemble de soupape (1) selon la revendication 1, dans lequel des surfaces des premier et deuxième éléments allongés (15a, 15b, 16a, 16b), tournées à l'opposé de la face intérieure (66a, 66b) des première et deuxième parties de boîtier (6a, 6b), et partant des première et deuxième rainures (13a, 13b), sont arrondies ou présentent des angles inclinés.

4. Ensemble de soupape (1) selon la revendication 1, dans lequel les première et deuxième rainures (13a, 13b) comprennent chacune une première partie de rainure (20a, 20b) et une deuxième partie de rainure (21a, 21b) s'étendant selon un angle (α) l'une par rapport à l'autre, et se rejoignant au niveau d'une zone d'indentation (22a, 22b) arrangée entre la deuxième et la troisième ouverture (3a, 4a), et arrangée plus près de la deuxième et de la troisième ouverture (3a, 4a) que de la première ouverture (2a).
